# EUROPÄISCHE PATENTSCHRIFT

(11) **EP 3 625 877 B1**
(45) Veröffentlichungstag und Bekanntmachung des Hinweises auf die Patenterteilung: **13.04.2022**
(21) Anmeldenummer: 18725811.6
(22) Anmeldetag: 16.05.2018
(51) Int. Cl.: H02K 5/06, H02K 5/22, B23K 26/18, B23K 26/282, H02K 5/10, H02K 5/15, H02K 15/14, B23K 101/36, B23K 101/06

(54) **ELEKTRISCHE MASCHINE SOWIE VERFAHREN ZUM HERSTELLEN EINER ELEKTRISCHEN MASCHINE**
ELECTRIC MACHINE AND METHOD OF PRODUCTION
MACHINE ÉLECTRIQUE ET PROCÉDÉ DE PRODUCTION

(30) Priorität: 19.05.2017 DE 102017208470; 05.04.2018 DE 102018205099
(43) Veröffentlichungstag der Anmeldung: 25.03.2020
(73) Patentinhaber: Robert Bosch GmbH, 70442 Stuttgart (DE)
(72) Erfinder: STUBNER, Armin, 77815 Buehl-Altschweier (DE); MEYER, Christian, 76228 Karlsruhe-Wolfartsweier (DE); DOMMSCH, Hans-Peter, 77839 Lichtenau (DE); GMUEND, Torsten, 76437 Rastatt -Plittersdorf (DE); GOG, Matthias, 76534 Baden-Baden (DE)
(86) Internationale Anmeldenummer: PCT/EP2018/062644
(87) Internationale Veröffentlichungsnummer: WO 2018/210894

(56) Entgegenhaltungen:
- DE-A1- 19 736 300
- DE-A1-102009 047 209
- DE-A1-102016 204 971
- DE-C1- 10 130 139

## Beschreibung

Die Erfindung bezieht sich auf eine elektrische Maschine, sowie auf ein Verfahren zum Herstellen einer solchen nach der Gattung der unabhängigen Ansprüche.

### Stand der Technik

Mit der DE 10 2011 084 763 A1 ist eine elektrische Maschine bekannt geworden, bei der ein Stator in einem Poltopf angeordnet ist. Auf dem Poltopf ist ein Steckerbauteil angeordnet, in dem eine Rotorwelle gelagert ist. Das Steckerbauteil ist hierbei aus Kunststoff gefertigt und weist elektrische Leiterelemente zur Verschaltung der elektrischen Wicklung des Stators auf. Dabei werden die Spulendraht-Enden der Wicklungen axial durch das Steckerbauteil hindurchgeführt und an der Oberseite des Steckerbauteils mit den Leiterelementen verbunden. Auf das Steckerbauteil aus Kunststoff wird ein Metalldeckel mit Kühlrippen montiert. Dabei wird der Metalldeckel mit dem Poltopf durch mehrere Stahlfederklammern verspannt, so dass die drei Bauteile gegeneinander fixiert sind. Nachteil einer solchen Ausführung ist, dass durch die Kombination eines Steckerbauteils aus Kunststoff und dem Polgehäuse und Deckel aus Metall keine zuverlässige Wärmeableitung und keine ausreichende EMV-Abschirmung gewährleistet ist. Es sind auch Gehäuse bekannt, bei denen zwei Metallbauteile miteinander verschweißt sind. Hierbei besteht die Gefahr, dass bei einem Laserschweißverfahren Laserstrahlen in das Innere des Gehäuses gelangen können und mit ihrem hohen Energieeintrag empfindlichere Bauteile beschädigen können. Dieser Nachteil soll durch die erfindungsgemäße Ausführung behoben werden.

DE 19736300A1 offenbart eine elektrische Maschine mit einem Polgehäuse, in dem ein Stator und ein Rotor aufgenommen ist, wobei ein Metalldeckel mit der offenen Seite des Polgehäuses verbunden ist, und wobei radial innerhalb eines Fügespalts zwischen dem Polgehäuse und dem Metalldeckel ein ununterbrochener umlaufender kreisförmiger Rahmen angeordnet ist, der als Metallgussteil ausgeführt ist.

### Offenbarung der Erfindung

### Vorteil der Erfindung

Die erfindungsgemäße Vorrichtung und das erfindungsgemäße Verfahren mit den Merkmalen der unabhängigen Ansprüche haben den Vorteil, dass durch die Anordnung eines Metallrings als Strahlschutz an der Innenseite des Fügespalts zwischen dem Polgehäuse und dem Metalldeckel beim Laserschweißen gestreute Laserstrahlen wirksam absorbiert werden. Dabei liegt der Metallring im Strahlengang der Laserstrahlen, die beim Schweißen in das Gehäuse eindringen können. Durch die Absorption der Laserstrahlen im Metallring werden andere empfindlichere Bauteile innerhalb des Gehäuses geschützt und die eingebrachte Energie wird im Metallring schnell abgeleitet. Dadurch wir besonders das im Gehäuseinneren angeordnete Steckergehäuse aus Kunststoff vor einem Aufschmelzen geschützt.

Durch die in den abhängigen Ansprüchen aufgeführten Maßnahmen sind vorteilhafte Weiterbildungen und Verbesserungen der in den unabhängigen Ansprüchen vorgegebenen Ausführungen möglich. Weist das Polgehäuse an seinem offenen Ende im radial äußeren Bereich eine radiale Stufe auf, so kann sowohl der Metallring als auch die Umfangswand des Metalldeckels axial in die radiale Stufe eingefügt werden. Dadurch können sowohl der Metallring als auch die Umfangswand des Metalldeckels zuverlässig radial gegenüber dem Polgehäuse fixiert werden, bevor im Radialspalt zwischen der Umfangswand und dem Polgehäuse die Schweißnaht ausgebildet wird. Der angeschweißte Metalldeckel drückt dabei den Metallring zuverlässig auf die ringförmige Grundfläche der radialen Stufe. Durch diese Anordnung des Metallrings axial unterhalb der Umfangswand wird alle Streustrahlung des Lasers beim Schweißen zuverlässig im Metallring absorbiert, da bei solch einer Ausführung der Laserstrahl in einem relativ flachen Winkel zur Axialrichtung in den ringförmigen Spalt trifft.

Da das Steckergehäuse axial oberhalb des Metallrings angeordnet ist, ist es durch den Metallring zuverlässig vor eindringenden Laserstrahlen abgeschirmt. Dabei ist vorteilhaft zwischen dem Steckergehäuse und dem Metalldeckel ein axiales Federelement angeordnet, das beim Anpressen des Metalldeckels axial gegen das Polgehäuse ebenfalls den Metallring zuverlässig gegen das Polgehäuse presst. Liegt der Metalldeckel unmittelbar axial am Metallring an, kann vorteilhafterweise mittels dem Federelement auch das Steckergehäuse axial gegen den Metallring verspannt werden, so dass das Steckergehäuse durch das Verschweißen des Metalldeckels mit dem Polgehäuse zuverlässig in der elektrischen Maschine fixiert ist.

Dazu weist das Steckergehäuse eine ringförmige umlaufende Wand auf, deren untere axiale Stirnfläche vorzugsweise direkt an dem Metallring anliegt. Dabei kann diese axiale Stirnfläche vollflächig am Metallring anliegen, oder mit einer axialen Verlängerung den Metallring axial übergreifen und sich im Bereich radial innerhalb des Metallrings zum Polgehäuse hin erstrecken. Bei der letzteren Ausführung ist die Steckergehäusewand gegenüber dem Metallring - und damit auch gegenüber dem Polgehäuse zentriert.

Durch die Ausbildung eines ringförmigen Spalts zwischen der Außenseite der Umfangswand des Metalldeckels und dem radialen Bund am Polgehäuse, kann die Schweißnaht innerhalb dieses Ringspalts angeformt werden, wodurch die Schweißnaht sehr zuverlässig dichtend ausgebildet werden kann. Der ringförmige Spalt bildet dabei eine Kerbe, so dass der Laserstrahl zur Ausbildung der Schweißnaht in einem flachen Winkel zur Axialrichtung in den Ringspalt gerichtet wird. Dabei liegt der Metallring axial unterhalb der Umfangswand genau im Strahlengang des eintreffenden Laserstrahls und dessen reflektierter Laserstrahlung.

In einer bevorzugten Ausführung ist der Metallring als integraler Bestandteil des Lagerschilds ausgebildet. Dabei weist das Lagerschild in seinem radialen äußeren Rand einen geschlossenen Umfang auf. Dieser geschlossene Umfangsrand ist als Metallring in den radialen Bund des Polgehäuses eingefügt und liegt an der Grundfläche der radialen Stufe an. Der umlaufende Rand ist hierbei als flacher Metallring ausgebildet, auf dem axial sowohl die Umfangswand des Metalldeckels als auch das Steckergehäuse axial aufliegen. Bei dieser Ausführung kann auf eine separate Fertigung des Metallrings verzichtet werden, da das Lagerschild als Biegestanzteil sehr einfach mit dem entsprechenden Metallring einstückig ausgebildet werden kann. Dieses Lagerschild nimmt ein Wälzlager auf, mittels dem der Rotor innerhalb des Polgehäuses gelagert ist.

An der radialen Stufe des Polgehäuses ist an der Grundfläche der Stufe im radial äußeren Bereich eine Sicke über den gesamten Umfang ausgebildet, vorzugsweise beim Tiefziehen des Poltopfes. In diese ringförmige Sicke kann vorteilhaft ein bei der Fertigung des Metallrings angeformter Stanzgrat eingreifen, so dass der Metallring zuverlässig flächig an der Grundfläche der radialen Stufe anliegt. Die Sicke ist gegenüber dem Innenraum des Motorgehäuses durch den Metallring und den Metalldeckel abgedichtet. Daher dient die Sicke auch als geschlossener Fangraum für Fremdpartikel, die beim Schweißen oder beim Einpressen des Metallrings in das Polgehäuse entstehen.

Das Lagerschild weist vorteilhaft radial innerhalb des Metallrings Freisparungen zwischen den radialen Stegen auf, durch die einerseits die axialen Verlängerung des Steckergehäuses axial von oben nach unten hindurchragen können - und andererseits die Befestigungsbereiche der Verschaltungsplatte und die darin aufgenommenen Spulendrahtenden axial von unten nach oben hindurchgreifen. Um eine Drehsicherung zwischen dem Steckergehäuse und dem Metallring, bzw. dem Lagerschild zu realisieren, sind an der radialen Innenseite des Metallrings und/oder durch die Freisparungen im Lagerschild Aussparungen ausgebildet, in die die Steckergehäusewand axial eingreift. Wird beispielsweise das Lagerschild in den radialen Bund eingepresst, kann das Steckergehäuse durch diesen Formschluss gegen ein Verdrehen gesichert werden.

Bevorzugt ist im Zentrum des Lagerschilds ein hülsenförmiger Lagersitz ausgeformt, in den das Wälzlager axial eingepresst ist. Durch die Anbindung des Lagersitzes über die gewölbten radialen Stege an den umlaufenden Metallring sind die axialen Einpresskräfte für das Wälzlager in den Lagersitz geringer als dessen axialen Auspresskräfte. Dadurch ist das Wälzlager über den Press-Sitz des Außenrings des Wälzlagers zuverlässig im hülsenförmigen Lagersitz gesichert.

In einer alternativen Ausführung liegt sowohl die Umfangswand des Metalldeckels als auch der Metallring axial an einem umlaufenden Flansch an der offenen Seite des Polgehäuses an. Bei dieser Ausführung ist die Schweißnaht nicht in einem Ringspalt angeordnet, sondern an der radialen Außenseite der Umfangswand und an der axialen Stirnseite des Flansches angeordnet. Bei diesem Schweißprozess ist der Laserstrahl unter einem größeren Winkel zur Axialrichtung angeordnet, so dass der Laserstrahl relativ flach am Flansch gestreut wird und ins Innere des Gehäuses eindringen kann. Daher ist vorteilhafterweise direkt an der Innenseite der Umfangswand des Metalldeckels der Metallring flächig am Flansch angelegt, so dass alle eindringenden und durch Streuung erzeugten Laserstrahlen durch den Metallring absorbiert werden. Ein solcher Metallring ist vorzugsweise als separates Bauteil ausgebildet und ist vorzugsweise radial außerhalb des vom Metallring separat gefertigten Lagerschilds angeordnet. Dabei kann das Lagerschild in eine radiale Stufe im Polgehäuse eingreifen und eine Verdrehsicherung mit dem Steckergehäuse aufweisen.

Der Querschnitt des Metallrings ist besonders günstig rechteckig oder L-förmig ausgebildet. Dabei liegt eine Seite immer flächig am Flansch oder an der Grundfläche der radialen Stufe an. Das Steckergehäuse liegt dabei an der axial gegenüberliegenden Seiten des Metallrings an, so dass sowohl der rechteckige als auch der L-förmige Metallring das Steckergehäuse axial nach oben vor den Laserstrahlen abschirmen. Die axiale Dicke des Metallrings - bzw. der axial sich erstreckende Schenkel - werden dabei jeweils an die Toleranzen und die genaue Geometrie des Fügespalts zwischen dem Metalldeckel und dem Polgehäuse angepasst. Besonders günstig ist es, den Metallring zumindest an der Seite, an der die Laserstrahlen auftreffen, mit einer dunklen Oberfläche auszubilden, um die Absorption zu erhöhen. Dies kann beispielsweise durch Verzundern eines Stahlmaterials oder Eloxieren eines Aluminiums realisiert werden. Dabei ist die Wärmeleitfähigkeit des Materials so hoch, dass die eingestrahlte Laserenergie schnell abgeleitet werden kann.

Durch das erfindungsgemäße Herstellungsverfahren kann der Metalldeckel zuverlässig auf das Polgehäuse geschweißt werden, ohne dass empfindliche Bauteile im Inneren des Gehäuses beschädigt werden. Dadurch kann genügend Laserenergie eingebracht werden, um eine über den gesamten Umfang zuverlässig dichtende Schweißnaht auszubilden. Durch die Integration des Metallrings in das Lagerschild kann auf eine separate Befestigung des Lagerschilds verzichtet werden, da durch das axial federnde Anpressen des Steckergehäuses gegen den Metallring mit der Ausbildung der Schweißnaht auch das Lagerschild zuverlässig am Polgehäuse fixiert ist. Dabei wird im Metalldeckel eine Ringdichtung gegenüber der Öffnung für den Anschluss-Stecker eingefügt, so dass der Metalldeckel auch zuverlässig gegenüber den axial aus dem Metalldeckel austretenden Anschluss-Stecker abgedichtet ist.

Wird der Metalldeckel über seinen gesamten Umfang mittels einer Schweißnaht mit dem Flansch des Poltopfes verschweißt, entsteht bis auf den Sockel mit dem Anschluss-Stecker ein sehr robustes Metallgehäuse, das einerseits erschütterungsfest ausgebildet ist, und andererseits als elektromagnetische Abschirmung dient. Ist an der zylindrischen Umfangswand des Metalldeckels eine radiale Abstufung ausgebildet, kann die daraus resultierende axiale Anschlagsfläche an der Innenseite des Metalldeckels als axialer Anschlag für die Axialfeder genutzt werden. Dabei kann mit der Herstellung des Metalldeckels gleichzeitig die radiale - und gegebenenfalls die axiale Dichtfläche für die Ringdichtung ausgebildet werden, und gleichzeitig der radiale Bauraum zwischen der Umfangswand des Steckergehäuses und der Innenseite des Metalldeckels für die hülsenförmige Rohrfeder zur Verfügung gestellt werden.

### Kurze Beschreibung der Zeichnungen

Ausführungsbeispiele der Erfindung sind in den Zeichnungen dargestellt und in der nachfolgenden Beschreibung näher erläutert. Es zeigen:
- Fig. 1: eine Ausführung einer erfindungsgemäßen elektrischen Maschine,
- Fig. 2.: eine Teilansicht eines weiteren Ausführungsbeispiels im Schnitt,
- Fig. 3: eine Detailansicht eines weiteren Ausführungsbeispiels im Schnitt, und
- Fig. 4: ein Lagerschild mit einem erfindungsgemäßen Metallring.

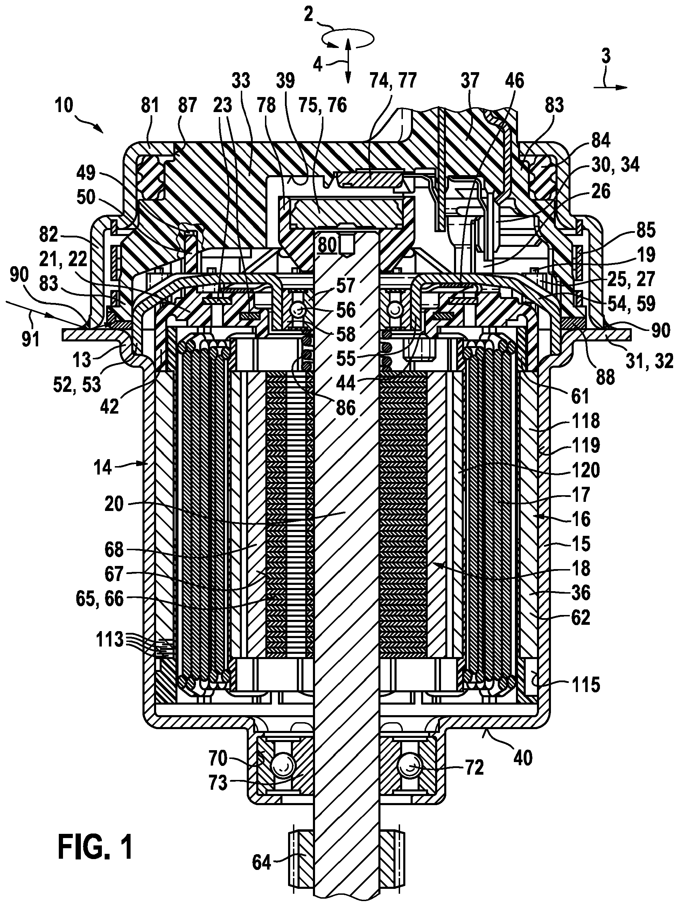

Fig. 1 zeigt ein Ausführungsbeispiel einer fertig montierten elektrischen Maschine 10, bei der ein Stator 16 in einem Gehäuse 14 einer elektrischen Maschine 10 eingesetzt ist. Dabei weist der Stator 16 Spulenträger 36 auf, die beispielsweise als Einzelsegmente 62 separat ausgebildet sind, und mit elektrischen Spulen 17 bewickelt sind. Das Gehäuse 14 weist ein als Poltopf 15 ausgebildetes Polgehäuse 15 auf, das beispielsweise einen magnetischen Rückschluss für die elektrischen Spulen 17 bildet. Der Poltopf 15 weist an seinem offenen Ende 31 einen Flansch 32 auf, auf den weitere Bauteile aufgesetzt sind. Im Ausführungsbeispiel gemäß Figur 1 weist der Poltopf 15 an seiner Bodenfläche 40 eine Öffnung auf, durch die eine Rotorwelle 20 hindurchragt, um ein Drehmoment der elektrischen Maschine 10 über ein Abtriebselement 64 an ein nicht dargestelltes Getriebeelement zu übertragen. An der Bodenfläche 40 ist ein erster Lagersitz 70 ausgeformt, in dem ein erstes Wälzlager 72 eingefügt ist. Der Innenring 73 des ersten Wälzlagers 72 ist dabei fest mit der Rotorwelle 20 verbunden. Somit bildet das erste Wälzlager 72, ein Festlager für den Rotor 18. Der Rotor 18 weist einen Rotorkörper 65 auf, der Permanentmagnete 68 trägt, die mit den elektrischen Spulen 17 zusammenwirken. Der Rotorkörper 65 besteht beispielsweise aus einzelnen, gestapelten Lamellenblechen 66, in denen Aussparungen 67 für die Permanentmagnete 68 ausgestanzt sind. Die Spulendraht-Enden 19 der Spulen 17 ragen in Axialrichtung 4 über die elektrischen Spulen 17 hinaus. Eine Verschaltungsplatte 22 ist axial auf den Stator 16 aufgesetzt, wobei aus einem Kunststoffkörper 21 ragende Leiterelemente 23 mittels Befestigungsabschnitten 25 mit dem Spulendraht der Spulen 17 verbunden sind. Dabei sind die elektrischen Verbindungen zwischen dem Spulendraht und den Befestigungsabschnitten 25 beispielsweise durch Verschweißen, Verlöten oder Vercrimpen gebildet. Im beschriebenen Ausführungsbeispiel weisen genau drei Leiterelemente 23 jeweils einen Anschluss-Pin 26 für die Phasen U, V und W auf. Der Kunststoffkörper 21 ist ringförmig ausgebildet, so dass in seiner mittleren Ausnehmung 44 die Rotorwelle 20 des Rotors 18 hindurchragen kann. Der Kunststoffkörper 21 stützt sich in Axialrichtung 4 über angeformte Abstandshalter 42 am Stator 16 ab. Die Abstandshalter 42 der Verschaltungsplatte 22 sind an deren radial äußerem Rand angeformt. Im Ausführungsbeispiel liegen die Abstandshalter 42 axial unmittelbar an den Wicklungsträgern 36 an, auf die die elektrischen Spulen 17 gewickelt sind. Die Wicklungsträger 36 sind hier als Einzelsegmente 62 für jede Spule 17 ausgebildet. Dabei ist auf den Wicklungsträgern 36 jeweils eine Isoliermaske 61 für die elektrischen Spulen 17 radial innerhalb der Abstandshalter 42 angeordnet. Der Wicklungsträger 36 setzt sich beispielsweise aus einzelnen aufgestapelten Blechlamellen 113 zusammen und weist ein Jochelement 118 auf, an dem sich mindestens ein Statorzahn 120 radial nach Innen erstreckt. Im dargestellten Schnitt durch das Jochelement 118 liegt dieses mit einer radialen Außenwand 119 radial mit einer Presspassung an der Innenwand 115 des Polgehäuses 15 an. Dabei können die Blechlamellen 113 optional auch als in Umfangsrichtung 2 geschlossene einstückige Ringlamellen ausgebildet sein, oder als einzelne Winkelsegmente, die zu mehreren Einzelsegmenten 62 des Stators 16 gehören.

Axial oberhalb der Verschaltungsplatte 22 ist ein Lagerschild 54 angeordnet, das an seinem radial äußeren Rand 53 am Poltopf 15 anliegt. Das Lagerschild 54 weist einen zweiten Lagersitz 55 auf, der axial in die mittlere Ausnehmung 44 der Verschaltungsplatte 22 eingreift. Im zweiten Lagersitz 55 ist ein zweites Wälzlager 56 aufgenommen, mittels dessen die Rotorwelle 20 drehbar im Stator 16 gelagert ist. Das zweite Wälzlager 56 ist beispielsweise als Kugellager ausgebildet und stellt ein Loslager für den Rotor 18 dar. Dabei ist ein Außenring 58 des zweiten Wälzlagers 56 drehfest im zweiten Lagersitz 55 und der Innenring 57 axial verschiebbar auf der Rotorwelle 20 befestigt. Das zweite Wälzlager 56 ist dabei beispielsweise axial in der gleichen Ebene wie die Verschaltungsplatte 22 angeordnet, so dass die elektrische Maschine 10 in Axialrichtung 4 sehr kompakt ausgebildet ist. Das Lagerschild 54 weist im Ausführungsbeispiel einzelne radiale Stege 59 auf, zwischen denen hindurch die als Aufnahmehülsen 27 ausgebildeten Befestigungsabschnitte 25 axial nach oben ragen. Die Spulendraht-Enden 19 der Spulen 17 sind in die Aufnahmehülsen 27 eingefügt, und beispielsweise stoffschlüssig mit diesen verbunden. Ebenso erstrecken sich die Anschluss-Pins 26 von dem Kunststoffkörper 21 durch das Lagerschild 54 hindurch, um mit entsprechenden Kontakten 30 eines Anschluss-Steckers 37 verbunden werden zu können. Die Verschaltungsplatte 22 wird zur Vibrationsdämpfung mittels axialer Federmitteln 46 vom Lagerschild 54 axial nach unten gegen die Wicklungsträger 36 gepresst. Die Federmittel 46 erzeugen eine axiale Vorspannung, die die Verschaltungsplatte 22 auch über einen großen Temperaturbereich und bei großen Schüttelbelastungen exakt positioniert hält.

Durch die Ausbildung der Federmittel 46 unabhängig vom Lagerschild 54 kann die Elastizität des Werkstoffs optimal an die Temperaturunterschiede und an die auftretenden Beschleunigungen angepasst werden. Der Rotor 18 ist axial gegenüber dem zweiten Wälzlager 56 mittels einer Druckfeder 86 vorgespannt. Die Druckfeder 86 stützt sich einerseits am Rotorkörper 65 und andererseits am Innenring 57 des zweiten Wälzlagers 56 ab.

Oberhalb des Lagerschilds 54 ist ein Steckergehäuse 33 angeordnet, an dem der nicht näher dargestellte äußere Anschlussstecker 37 zur Stromversorgung der elektrischen Maschine 10 angeordnet ist. Am Steckergehäuse 33 sind an dessen Innenseite 39 die elektrischen Kontakte 30 angeordnet, die mit den Anschluss-Pins 26 der Verschaltungsplatte 22 verbunden sind. Die Verschaltungsplatte 22 ist sowohl mit den Spulendraht-Enden 19 als auch mit den elektrischen Kontakten 30 des Anschlusssteckers 37 verbunden ist. Beispielsweise erstrecken sich die elektrischen Kontakte 30 als Kontaktlaschen 34 axial nach unten, so dass sie unmittelbar benachbart zu den Anschluss-Pins 26 angeordnet sind und dann beispielsweise miteinander verschweißt werden. Im Steckergehäuse 33 ist ein Sensorelement 74 befestigt, das mit einem Signalgeber 75 auf der Rotorwelle 20 zusammenwirkt, um deren Rotorlage zu erfassen. Dazu wird nach der Montage des Lagerschilds 54 ein Magnethalter 78 am freien Ende 80 der Rotorwelle 20 aufgepresst, der einen Sensormagnet 76 aufnimmt. Dessen rotierendes Magnetfeld wird vom Sensorelement 74 erfasst, das als hochauflösenden Magnetfeldsensor 77 ausgebildet ist. Auf das Steckergehäuse 33 ist axial ein Metalldeckel 81 gefügt, der am Polgehäuse 15 mittels einer Schweißnaht 90 festgeschweißt ist. Das Steckergehäuse 33 weist eine kreisförmige Steckergehäuseswand 83 und der Metalldeckel 81 weist eine kreisförmige Umfangswand 82 auf, die radial nebeneinander angeordnet sind. Zwischen dem Steckergehäuse 33 und der Innenwand des Metalldeckels 81 ist ein Radialdichtring 84 eingepresst, der die elektrische Maschine 10 zum Anschlussstecker 37 - vorzugsweise zu einer axialen Öffnung 87 im Metalldeckel 81 - hin abdichtet. Des Weiteren ist zwischen dem Steckergehäuse 33 und dem Metalldeckel 81 ein axiales Federelement 85 angeordnet, das das Steckergehäuse 33 axial gegen den Poltopf 15 presst.

Der Metalldeckel 81 ist im Ausführungsbeispiel mittels Laserschweißen mit dem offenen Ende 31 des Polgehäuses 15 verbunden. Schematisch ist ein Strahlengang des Laserstrahls 91 dargestellt, der beim Schweißvorgang zwischen dem Metalldeckel 81 und dem Polgehäuse 15 in das Innere des Gehäuses 14 eindringen kann. Damit der Laserstrahl 91 hier nicht auf das Steckergehäuse 33 aus Kunststoff trifft, ist im potentiellen Strahlengang des Laserstrahls 91 ein Metallring 88 angeordnet, der die Energie des Laserstrahls 91 absorbiert und die dabei erzeugte Wärme gut ableitet. Der Metallring 88 liegt axial auf dem Flansch 32, und radial innerhalb der Umfangswand 82 des Metalldeckels 81, der axial ebenfalls an dem Flansch anliegt. Das Steckergehäuse 33 liegt mit seiner Steckergehäusewand 83 axial auf dem Metallring 88. Damit ist das Steckergehäuse 33 axial und/oder radial durch den Metallring 88 von dem Laserstrahl 91 im Gehäuseinneren getrennt. Auf der linken Bildseite hat der Metallring 88 einen rechtwinkligen Querschnitt, so dass sich ein Schenkel in Axialrichtung 4 und ein anderer Schenkel in Radialrichtung 3 erstreckt. In der rechten Bildseite ist der Metallring 88 als flacher Ring ausgebildet dessen Erstreckung in Radialrichtung 3 größer ist als in Axialrichtung 4. Radial innerhalb des Metallrings 88 ist bevorzugt das Lagerschild 54 angeordnet. Das Lagerschild 54 weist hier axiale Fortsätze 52 auf, die in einen umlaufenden radialen Bund 13 an der offenen Seite 31 des Polgehäuses 15 eingreifen. Durch das Festschweißen des Metalldeckels 81 wird mittels der Feder 85 das Steckergehäuse 33 axial gegen den Metallring 88 und dieser gegen den Flansch 32 gepresst, und dadurch sicher fixiert. Am Lagerschild 54 ist als Verdrehsicherung eine axiale Erstreckung 50 ausgebildet, die in eine korrespondierende Aussparung 49 im Steckergehäuse 33 eingreift. Der Metallring 88 weist vorzugsweise eine dunkle, beispielsweise schwarze Oberfläche auf, die durch Verzundern oder Eloxieren hergestellt werden kann. Als Material für den Metallring 88 wird bevorzugt Stahl oder Aluminium verwendet.

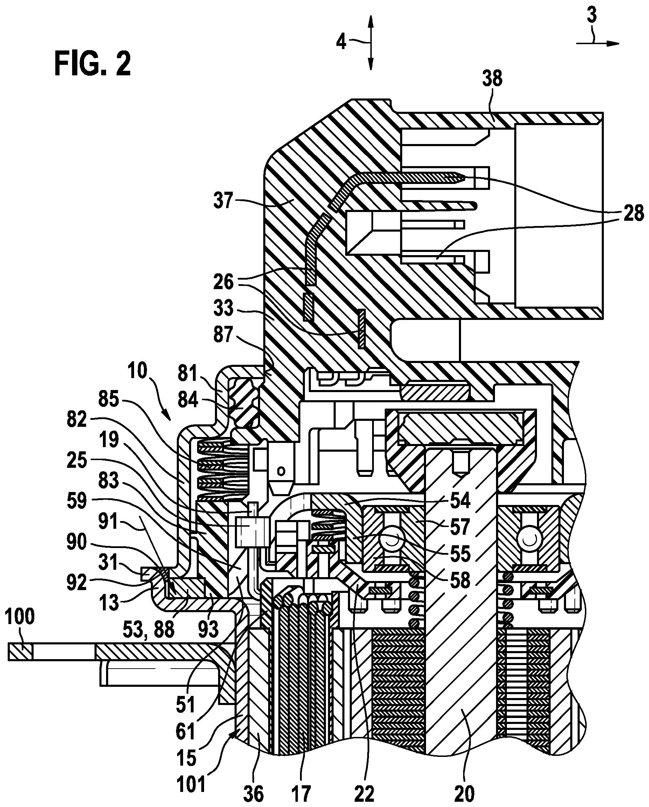

In Fig. 2 ist ein weiteres Ausführungsbeispiel einer erfindungsgemäßen elektrischen Maschine 10 im Schnitt dargestellt. Der Anschlussstecker 37 erstreckt sich vom Steckergehäuse 33 ausgehend in Axialrichtung 4, wobei die Anschluss-Pins 26 der U-, V-, W-Phase als Stecker-Pins 28 in einen Steckerkragen 38 geführt werden. Dabei erstreckt sich der Steckerkragen 38 für einen korrespondierenden Gegenstecker in Radialrichtung 3. Axial über das Steckergehäuse 33 ist wieder der Metalldeckel 81 gefügt, durch dessen axiale Öffnung 87 der Anschlussstecker 37 hindurchragt. Die Umfangswand 82 des Metalldeckels 81 liegt in diesem Ausführungsbeispiel nicht unmittelbar am Flansch 32 des Polgehäuses 15 an, sondern axial auf dem Metallring 88. Der Metallring 88 ist hierbei als Bestandteil des Lagerschilds 54 ausgebildet, das als Biegestandsteil hergestellt ist. Dabei bildet der radial äußere Rand 53 den geschlossenen, umlaufenden Metallring 88. Der Metallring 88 liegt hierbei innerhalb eines umlaufenden radialen Bundes 13 am offenen Rand 31 des Polgehäuses 15. Die Schweißnaht 90 zwischen dem Metalldeckel 81 und dem Polgehäuse 15 ist hierbei in einem umlaufenden, keilförmigen Spalt 92 angeordnet, der sich vom offenen Ende 31 hin in Axialrichtung 4 zum umlaufenden Bund 13 erstreckt. Bei dieser Schweißnaht 90 ist der Laserstrahl 91 axial steiler nach unten gerichtet, so dass er von dem axial tiefer gelegenen Metallring 88 im Inneren des Gehäuses 14 absorbiert wird. Dabei schirmt der Metallring 88 das Steckergehäuse 33 gegenüber der Schweißnaht 90 ab. Das Steckergehäuse 33 stützt sich hierbei axial an dem Metallring 88 ab und wird in Axialrichtung 4 mittels dem Federelement 85 axial gegenüber dem Metalldeckel 81 verspannt. Das Lagerschild 54 weist wiederum radiale Stege 59 auf, die den äußeren Rand 53, der den Metallring 88 bildet, radial mit dem zweiten Lagersitz 55 verbindet. Zwischen den radialen Stegen 59 sind Freisparungen 51 ausgeformt, durch die hindurch axiale Verlängerungen 35 der Steckergehäusewand 83 axial hindurchgreifen. Die Spulendrahtenden 19 und die damit verbundenen Befestigungsabschnitte 25 der Verschaltungsplatte 22 greifen ebenfalls axial durch diese Freisparungen 51 hindurch. In Fig. 2 ist des Weiteren ein Befestigungsflansch 100 dargestellt, der an der radialen Außenwand 101 des Polgehäuses 15 befestigt - vorzugsweise ebenfalls festgeschweißt - ist. Mittels des Befestigungsflansches 100 kann die elektrische Maschine 10 am Kraftfahrzeug befestigt, bevorzugt festgeschraubt werden. Durch die Ausbildung des Lagerschilds 54 mit dem hülsenförmigen Lagersitz 55 der über die radialen Stege 59 an den Metallring angebunden ist, sind die axialen Auspresskräfte für das zweite Wälzlager 56 aus dem Lagersitz 55 größer als dessen axiale Einpresskräfte. Dadurch ist der äußere Lagerring 58 sehr zuverlässig im Lagersitz 55 gesichert. Verstärkt wird dieser Effekt, wenn an der radialen Innenkante des Lagersitzes 55 noch ein Stanzgrat von dessen Herstellung angeformt ist, der sich an der Umfangsfläche des Lagers 56 festkrallt.

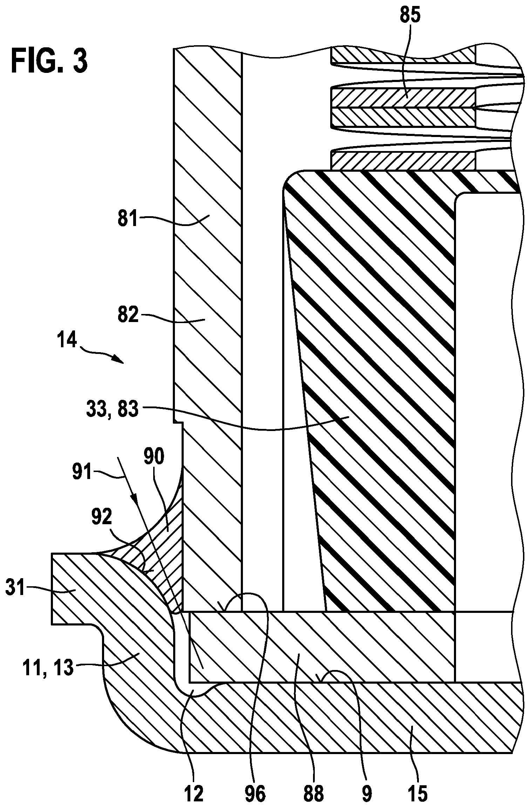

Fig. 3 zeigt eine weitere Ausführung als Detailansicht entsprechend Fig. 2. Wiederum ist der Metallring 88 als integrierter Teil des Lagerschilds 54 ausgebildet, der innerhalb des umlaufenden radialen Bundes 13 des Polgehäuses 15 angeordnet ist. Dabei ist an einer axialen Grundfläche 9 des Bundes 13 eine umlaufende, ringförmige Sicke 12 ausgeformt, die gegebenenfalls einen Stanzgrat des Metallrings 88 aufnehmen kann. Die Sicke kann als Ringnut bevorzugt beim Tiefziehen des Polgehäuses 15 in Axialrichtung 4 in die Grundfläche 9 eingepresst werden. Außerdem kann die Sicke 12 auch Späne aufnehmen, die beim Einpressen des Metallrings, der beispielsweise Bestandteil des Lagerdeckels ist, in das Polgehäuse 15 entstehen. Beim Anbringen der Laser-Schweißnaht 90 können auch Schmutzpartikel entstehen, die sich in der Sicke 12 sammeln können. Die umlaufende Sicke 12 bildet mit dem Polgehäuse 15, dem Metallring 88, dem Metalldeckel 81 und der Laser-Schweißnaht 90 einen abgeschlossenen Fangraum, in dem die Späne und Schmutzpartikel festgehalten werden und so ein Eindringen dieser Partikel in den Innenraum des Motors verhindert wird.

Der umlaufende Bund 13 bildet eine radiale Stufe 11 des Polgehäuses 15, an dessen Grundfläche 9 der Metallring 88 axial anliegt. Bei dieser Ausführung liegt die Steckergehäusewand 83 axial vollflächig auf dem Metallring 88 auf, und weist insbesondere keine axialen Verlängerungen 93 auf. Die axiale Stirnseite 96 der Umfangswand 82 des Metalldeckels 81 liegt ebenfalls flächig an dem Metallring 88 an. Im Ausführungsbeispiel ist die Wandstärke der Umfangswand 82 im Bereich der Schweißnaht 90 etwas dünner ausgebildet, als axial weiter beabstandet zur Schweißnaht 90. Die Schweißnaht 90 füllt den keilförmigen Spalt 92 zwischen der Umfangswand 82 und Polgehäuse 15 - bevorzugt vollständig - aus. Dabei sind Laserschweißverfahren anwendbar, die zusätzliches Schweißmaterial in die Schweißnaht 90 mit einbringen, oder lediglich das Material des Metalldeckels 81 und des Polgehäuses 15 aufschmelzen. Das Federelement 85 zur axialen Verspannung des Steckergehäuses 33 gegenüber dem Metalldeckel 81 ist insbesondere in Form von ringförmigen Wellscheiben ausgebildet, die einen axialen Federweg zur Verfügung stellen.

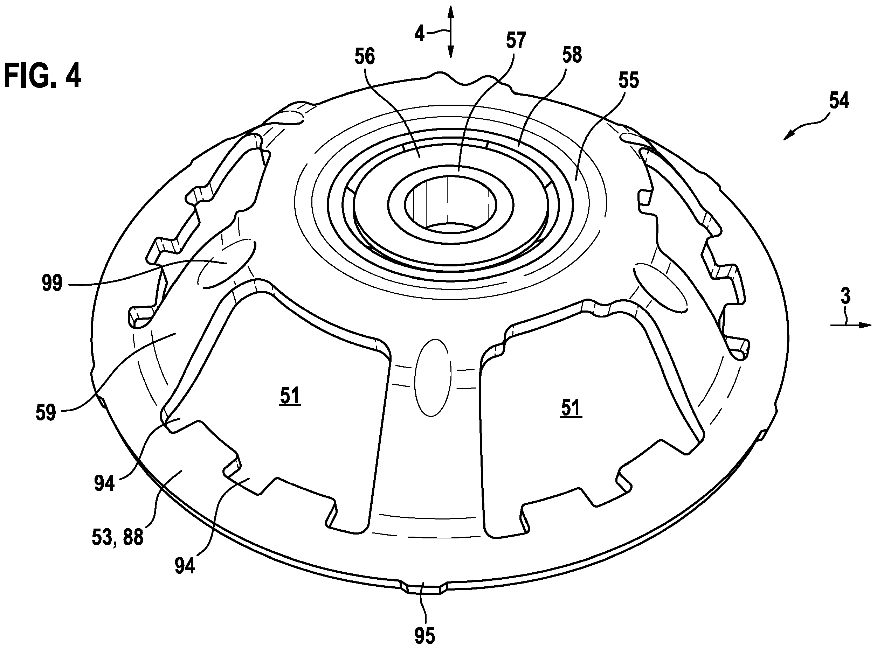

Die Fig. 4 zeigt ein Lagerschild 54 mit einem eingesetzten zweiten Wälzlager 56, wie es beispielsweise in der elektrischen Maschine 10 gemäß der Fig. 2 verbaut ist. Von dem zentralen Lagersitz 55 erstrecken sich die radialen Stege 59 bis zum radial äußeren Rand 53. Dieser umlaufende Rand 53 ist gleichzeitig als Metallring 88 ausgebildet, der die in das Gehäuse 14 eindringenden Laserstrahlen 91 absorbiert. Das Lagerschild 54 ist hierbei als Stanzbiegeteil aus Stahl gebildet, wobei zwischen den radialen Stegen 59 die Freisparungen 51 ausgestanzt sind. Im Bereich der Freisparungen 51 ist an dem Metallring 88 an dessen radialer Innenseite ein Formschluss 94 ausgestanzt, in dem die axialen Verlängerungen 93 der Steckergehäusewand 83 eingreifen können. Dadurch bildet das Steckergehäuse 33 eine Verdrehsicherung mit dem Lagerschild 54. Das Lagerschild 54 ist hierbei hutförmig ausgebildet, so dass der Metallring 88 axial beabstandet vom zweiten Lagersitz 55 angeordnet ist. Die beiden axialen Ebenen werden durch die gebogenen radialen Stege 59 in Radialrichtung 3 und Axialrichtung 4 miteinander verbunden. Dabei sind beispielsweise entlang den radialen Stegen 59 Sicken 99 zur Stabilisierung des Lagerschilds 54 angeformt. Optional sind am äußeren Umfang des Metallrings 88 radiale Vorsprünge 95 ausgeformt, die in den umlaufenden Radialbund 13 eingepresst werden können. Der Metallring 88, der als Teil des Lagerschilds 54 ausgeführt ist, wird bevorzugt nur an den radialen Vorsprüngen 95 am Polgehäuse 15 verpresst. Zwischen den radialen Vorsprüngen 95 ist in Umfangsrichtung 2 ein Entgasungsspalt zwischen dem Metallring 88 und dem Polgehäuse 15 ausgebildet, so das lose Partikel, die beim Schweißen der umlaufenden Laser-Schweißnaht 90 entstehen, durch den Entgasungsspalt in den Fangraum der Sicke 12 gelangen und dort festgehalten werden. Der Schweißprozess beginnt und endet bevorzugt zwischen den radialen Vorsprüngen 95. Beispielsweise sind in Fig. 4 sechs radiale Vorsprünge 95 gleichmäßig über den Umfang - bevorzugt im Bereich der Stege 59 - angeformt. Die radialen Vorsprünge 95 können jedoch auch als Doppelnasen ausgebildet sein, die jeweils paarweise im Bereich der beiden Kanten der Stege 59 angeordnet sind.

Es sei angemerkt, dass hinsichtlich der in den Figuren und der Beschreibung gezeigten Ausführungsbeispiele vielfältige Kombinationsmöglichkeiten der einzelnen Merkmale untereinander möglich sind. Die Anordnung und Ausformung des Metallrings 88 kann an die konkrete Geometrie des Polgehäuses und des Metalldeckels 81 angepasst werden, wobei der Metallring 88 entsprechend im Strahlengang des Laserstrahls innerhalb des Gehäuses 14 liegt. Insbesondere kann der Metallring 88 als separat gefertigtes Bauteil gefertigt oder in das Lagerschild 54 integriert sein. Dabei kann das Lagerschild 54 in einem Prozess-Schritt mit dem Anfertigen der Schweißnaht 90 am Polgehäuse 15 fixiert werden. Die erfinderische Antriebseinheit 10 eignet sich besonders als Ausführung eines EC-Motors zur Verstellung beweglicher Komponenten im Kraftfahrzeug. Dabei kann ein solcher erfindungsgemäßer Elektromotor 10 besonders günstig im Außenbereich, wie beispielsweise im Motorraum vorzugsweise zur Verstellung von beweglichen Teilen oder Betreiben von Pumpen im Motorraum, eingesetzt werden, wo er extremen Witterungsbedingungen und Erschütterungen ausgesetzt ist.

## Patentansprüche

1. Elektrische Maschine (10), insbesondere ein elektronisch kommutierter EC-Motor, mit einem Polgehäuse (15), in dem ein Stator (16) und ein Rotor (18) aufgenommen ist, und axial auf einer offenen Seite (31) des Polgehäuses (15) ein Steckergehäuse (33) aus Kunststoff mit einem integrierten Anschluss-Stecker (37) angeordnet ist, wobei das Steckergehäuse (33) über seinen gesamten Umfang von einem Metalldeckel (81) umschlossen ist, der mit der offenen Seite (31) des Polgehäuses (15) mittels einer umlaufenden Laser-Schweißnaht (90) dicht verschweißt ist, wobei radial innerhalb der Laser-Schweißnaht (90) ein ununterbrochener umlaufender Metallring (88) als Strahlschutz angeordnet ist, der im Strahlengang eines Lasers (91) liegt, der beim Laserschweißen durch einen Fügespalt zwischen dem Polgehäuse (15) und dem Metalldeckel (81) in den Innenraum der elektrische Maschine (10) eindringen kann, wobei das Steckergehäuse (33) axial gegen den Metallring (88) gepresst wird.

2. Elektrische Maschine (10) nach Anspruch 1, **dadurch gekennzeichnet, dass** der Metallring (88) in eine radiale Stufe (11) des Polgehäuses (15) eingefügt ist und an einer axialen Grundfläche (9) der radialen Stufe (11) anliegt.

3. Elektrische Maschine (10) nach Anspruch 1 oder 2, **dadurch gekennzeichnet, dass** das Steckergehäuse (33) mittels eines Federelements (85) zwischen dem Steckergehäuse (33) und dem Metalldeckel (81) gegen den Metallring (88) gepresst wird.

4. Elektrische Maschine (10) nach einem der vorherigen Ansprüche, **dadurch gekennzeichnet, dass** das Steckergehäuse (33) eine zylinderförmige Umfangswand (83) aufweist, deren dem Polgehäuse (15) zugewandter Rand unmittelbar an dem Metallring (88) anliegt.

5. Elektrische Maschine (10) nach einem der vorherigen Ansprüche, **dadurch gekennzeichnet, dass** die zylindrischen Umfangswand (82) des Metalldeckels (81) axial in die radiale Stufe (11) des Polgehäuses (15) eingreift und axial unmittelbar an dem Metallring (88) anliegt.

6. Elektrische Maschine (10) nach einem der vorherigen Ansprüche, **dadurch gekennzeichnet, dass** die Laser-Schweißnaht (90) bezüglich der Rotorachse axial oberhalb des Metallrings (88) zum Anschluss-Stecker (37) hin angeordnet ist, insbesondere in einer ringförmigen Kerbe (92) zwischen der Außenseite der zylindrischen Umfangswand (82) und dem axial oberen umlaufenden Rand der radialen Stufe (11) des Polgehäuses (15).

7. Elektrische Maschine (10) nach einem der vorherigen Ansprüche, **dadurch gekennzeichnet, dass** der Metallring (88) als ein radial äußerer Rand (53) eines - insbesondere einstückigen - Lagerschilds (54) ausgebildet ist, in dem der Rotor (18) mittels eines Wälzlagers (56) gelagert ist.

8. Elektrische Maschine (10) nach einem der vorherigen Ansprüche, **dadurch gekennzeichnet, dass** an der axialen Grundfläche (9) an deren radialer Außenseite eine ringförmige Sicke (12) in Axialrichtung (4) ausgeformt ist, die einen Stanzgrat des Metallrings (88) oder Späne, die beim Einpressen des Metallrings (88) in das Polgehäuse (15) entstehen oder Schweißpartikel von der Laser-Schweißnaht (90) aufnehmen und/oder gefangen halten kann.

9. Elektrische Maschine (10) nach einem der vorherigen Ansprüche, **dadurch gekennzeichnet, dass** das Lagerschild (54) zwischen dem Metallring (88) als seinem äußeren Umfang und einer zentralen Lageraufnahme (55) für das Wälzlager (56) radiale Stege (59) aufweist, zwischen denen in Umfangsrichtung (2) Freisparungen (51) ausgeformt sind, und die Steckergehäusewand (83) abschnittsweise mit axialen Verlängerungen (93) axial in die Freisparungen (51) eingreift, wobei vorzugsweise die axialen Verlängerungen (93) radial an dem Metallring (88) anliegen.

10. Elektrische Maschine (10) nach einem der vorherigen Ansprüche, **dadurch gekennzeichnet, dass** die axialen Verlängerungen (93) eine Drehsicherung mit dem Lagerschild (54) bilden, wobei die radialen Stege (59) vorzugsweise zum Metallring (88) axial abgewinkelt oder gewölbt sind und die Lageraufnahme (55) als zentrale Hülse ausgebildet ist, deren Übergang zu den radialen Stegen (59) axial beabstandet zum Metallring (88) angeordnet ist.

11. Elektrische Maschine (10) nach einem der vorherigen Ansprüche, **dadurch gekennzeichnet, dass** der Metalldeckel (81) und der radial innerhalb von diesem angeordnete Metallring (88) axial an einem Flansch (32) des Polgehäuses (15) anliegen und die Laser-Schweißnaht (90) an der radialen Außenseite des Metalldeckels (81) ebenfalls axial an dem Flansch (32) angeformt ist.

12. Elektrische Maschine (10) nach einem der vorherigen Ansprüche, **dadurch gekennzeichnet, dass** der axial dem Polgehäuse (15) zugewandte Rand der Umfangswand (82) des Metalldeckels (81) auf der gleichen radialen Ebene unmittelbar zwischen der Laser-Schweißnaht (90) und dem Metallring (88) angeordnet ist, wobei insbesondere der axial dem Polgehäuse (15) zugewandte Rand der Steckergehäusewand (83) vollständig radial außerhalb des Lagerschilds (54) angeordnet ist.

13. Elektrische Maschine (10) nach einem der vorherigen Ansprüche, **dadurch gekennzeichnet, dass** der Metallring (88) als separat gefertigtes Bauteil ausgebildet ist, der in Umfangsrichtung (2) betrachtet einen L-förmigen Querschnitt oder einen rechteckigen Querschnitt aufweist, wobei letzterer insbesondere hochkant oder liegend angeordnet ist.

14. Elektrische Maschine (10) nach einem der vorherigen Ansprüche, **dadurch gekennzeichnet, dass** der Metallring (88) eine dunkle - insbesondere schwarze Oberfläche zur Absorption der Laserstrahlen (91) aufweist - und vorzugsweise aus Aluminium oder Stahl gefertigt ist.

15. Verfahren zum Herstellen einer elektrischen Maschine (10) nach einem der vorherigen Ansprüche, **gekennzeichnet durch** folgende Schritte:
- Montage des Stators (16) und das Rotors (18) im Polgehäuse (15), derart, dass das metallene Lagerschild (54) in eine radiale Stufe (11) am offenen Rand (31) des Polgehäuses (15) axial eingefügt wird,
- Aufsetzen des Steckergehäuses (33) auf den Umfangsrand (53) des Lagerschilds (54), der als geschlossener Metallring (88) ausgebildet ist,
- Axiales Fügen des Metalldeckels (81) auf das Steckergehäuse (33) - insbesondere so, dass ein Anschluss-Stecker (37) des Steckergehäuses (33) axial durch eine Aussparung (87) des Metalldeckels (81) ragt - wobei der Metalldeckel (81) mittels eines Federelements (85) das Steckergehäuse (33) axial gegen den Metallring (88) presst,
- Dichtes Verschweißen des Metalldeckels (81) mit dem Polgehäuse (15) mittels eines Lasersstrahls (91).

## Claims

1. Electrical machine (10), in particular an electronically commutated (EC) motor, having a pole housing (15) in which a stator (16) and a rotor (18) are accommodated, and a plastic plug housing (33) having an integrated connection plug (37) is arranged axially on an open side (31) of the pole housing (15), wherein the plug housing (33) is enclosed over its entire circumference by a metal cover (81) which is welded in a leaktight manner to the open side (31) of the pole housing (15) by means of an encircling laser weld seam (90), wherein an uninterrupted encircling metal ring (88) is arranged as beam protection radially within the laser weld seam (90) and lies in the beam path of a laser (91) which can enter the interior of the electrical machine (10) through a joint gap between the pole housing (15) and the metal cover (81) during laser welding, wherein the plug housing (33) is pressed axially against the metal ring (88).

2. Electrical machine (10) according to Claim 1, **characterized in that** the metal ring (88) is inserted into a radial step (11) of the pole housing (15) and rests against an axial base surface (9) of the radial step (11).

3. Electrical machine (10) according to Claim 1 or 2, **characterized in that** the plug housing (33) is pressed against the metal ring (88) by means of a spring element (85) between the plug housing (33) and the metal cover (81) .

4. Electrical machine (10) according to one of the preceding claims, **characterized in that** the plug housing (33) has a cylindrical circumferential wall (83), the edge of the circumferential wall, which edge faces the pole housing (15), bearing directly against the metal ring (88).

5. Electrical machine (10) according to one of the preceding claims, **characterized in that** the cylindrical circumferential wall (82) of the metal cover (81) engages axially into the radial step (11) of the pole housing (15) and bears axially directly against the metal ring (88) .

6. Electrical machine (10) according to one of the preceding claims, **characterized in that** the laser weld seam (90) is arranged axially above the metal ring (88) with respect to the rotor axis in the direction of the connection plug (37), in particular in an annular notch (92) between the outer side of the cylindrical circumferential wall (82) and the axially upper encircling edge of the radial step (11) of the pole housing (15).

7. Electrical machine (10) according to one of the preceding claims, **characterized in that** the metal ring (88) is designed as a radially outer edge (53) of an - in particular one-piece - end plate (54) in which the rotor (18) is mounted by means of a roller bearing (56).

8. Electrical machine (10) according to one of the preceding claims, **characterized in that** an annular bead (12) is formed in the axial direction (4) on the axial base surface (9) at its radial outer side, which annular bead can receive and/or hold captive a punching burr of the metal ring (88) or chips, which are produced when the metal ring (88) is pressed into the pole housing (15), or welding particles from the laser weld seam (90).

9. Electrical machine (10) according to one of the preceding claims, **characterized in that** the end plate (54) has radial webs (59) between the metal ring (88) as its outer circumference and a central bearing receptacle (55) for the roller bearing (56), clearances (51) being formed between the radial webs in the circumferential direction (2), and the plug housing wall (83) engages axially into the clearances (51) in sections by way of axial extensions (93), wherein the axial extensions (93) preferably bear radially against the metal ring (88).

10. Electrical machine (10) according to one of the preceding claims, **characterized in that** the axial extensions (93) form a rotation-prevention means with the end plate (54), wherein the radial webs (59) are preferably axially angled with respect to the metal ring (88) or curved and the bearing receptacle (55) is designed as a central sleeve, the transition of which to the radial webs (59) is arranged at an axial distance from the metal ring (88).

11. Electrical machine (10) according to one of the preceding claims, **characterized in that** the metal cover (81) and the metal ring (88) arranged radially within the metal cover bear axially against a flange (32) of the pole housing (15), and the laser weld seam (90) on the radially outer side of the metal cover (81) is likewise axially integrally formed on the flange (32).

12. Electrical machine (10) according to one of the preceding claims, **characterized in that** the edge of the circumferential wall (82) of the metal cover (81), which edge axially faces the pole housing (15), is arranged on the same radial plane directly between the laser weld seam (90) and the metal ring (88), wherein in particular the edge of the plug housing wall (83), which edge axially faces the pole housing (15), is arranged entirely radially outside the end plate (54).

13. Electrical machine (10) according to one of the preceding claims, **characterized in that** the metal ring (88) is designed as a separately manufactured component which, as viewed in the circumferential direction (2), has an L-shaped cross section or a rectangular cross section, wherein the latter is arranged, in particular, upright or horizontally.

14. Electrical machine (10) according to one of the preceding claims, **characterized in that** the metal ring (88) has a dark - in particular black - surface for absorbing the laser beams (91) and is preferably manufactured from aluminium or steel.

15. Method for producing an electrical machine (10) according to one of the preceding claims, **characterized by** the following steps:
- fitting the stator (16) and the rotor (18) in the pole housing (15) in such a way that the metal end plate (54) is axially inserted into a radial step (11) at the open edge (31) of the pole housing (15),
- mounting the plug housing (33) onto the circumferential edge (53) of the end plate (54), which is designed as a closed metal ring (88),
- axially joining the metal cover (81) onto the plug housing (33) - in particular such that a connection plug (37) of the plug housing (33) projects axially through a cutout (87) of the metal cover (81) - wherein the metal cover (81) presses axially against the metal ring (88) by means of a spring element (85),
- welding the metal cover (81) in a leaktight manner to the pole housing (15) by means of a laser beam (91).

## Revendications

1. Machine électrique (10), en particulier moteur EC à commutation électronique, comprenant un bâti (15) dans lequel un stator (16) et un rotor (18) sont logés et un boîtier de connecteur (33) en matière synthétique, pourvu d'un connecteur de raccordement intégré (37), est disposé axialement sur un côté ouvert (31) du bâti (15), le boîtier de connecteur (33) étant entouré sur toute sa circonférence par un couvercle métallique (81) qui est soudé de manière étanche au côté ouvert (31) du bâti (15) au moyen d'un cordon de soudure laser circonférentiel. (90), une bague métallique circonférentielle ininterrompue (88) étant disposée radialement à l'intérieur du cordon de soudure laser (90) en tant que protection contre les rayonnements, laquelle bague se trouve dans le trajet de faisceau d'un laser (91) qui peut pénétrer dans l'espace intérieur de la machine électrique (10) lors du soudage laser à travers un espace de jonction ménagé entre le bâti (15) et le couvercle métallique (81), le boîtier de connecteur (33) étant pressé axialement contre la bague métallique (88).

2. Machine électrique (10) selon la revendication 1, **caractérisée en ce que** la bague métallique (88) est insérée dans un gradin radial (11) du bâti (15) et vient en appui sur une surface de base axiale (9) du gradin radial (11).

3. Machine électrique (10) selon la revendication 1 ou 2, **caractérisée en ce que** le boîtier de connecteur (33) est pressé contre la bague métallique (88) par un élément à ressort (85) situé entre le boîtier de connecteur (33) et le couvercle métallique (81).

4. Machine électrique (10) selon l'une des revendications précédentes, **caractérisée en ce que** le boîtier de connecteur (33) comporte une paroi périphérique cylindrique (83) dont le bord dirigé vers le bâti (15) vient en appui direct sur la bague métallique (88).

5. Machine électrique (10) selon l'une des revendications précédentes, **caractérisée en ce que** la paroi périphérique cylindrique (82) du couvercle métallique (81) s'engage axialement dans le gradin radial (11) du bâti (15) et vient axialement en appui directement sur la bague métallique (88).

6. Machine électrique (10) selon l'une des revendications précédentes, **caractérisée en ce que** le cordon de soudure laser (90) est disposé, par rapport à l'axe du rotor, axialement au-dessus de la bague métallique (88) en direction du connecteur de raccordement (37), notamment dans une encoche annulaire (92) ménagée entre le côté extérieur de la paroi périphérique cylindrique (82) et le bord périphérique axialement supérieur du gradin radial (11) du bâti (15) .

7. Machine électrique (10) selon l'une des revendications précédentes, **caractérisée en ce que** la bague métallique (88) est conçue comme un bord radialement extérieur (53) d'une flasque (54), notamment monobloc, dans laquelle le rotor (18) est monté au moyen d'un palier à rouleaux (56).

8. Machine électrique (10) selon l'une des revendications précédentes, **caractérisée en ce qu'**un bourrelet annulaire (12) est formé dans la direction axiale (4) sur la surface de base axiale (9) du côté extérieur radial de celle-ci, lequel bourrelet peut générer une bavure de découpage de la bague métallique (88) ou des copeaux lorsque la bague métallique (88) est enfoncée dans le bâti (15), ou peut recevoir et/ou piéger des particules de soudure du cordon de soudure laser (90).

9. Machine électrique (10) selon l'une des revendications précédentes, **caractérisée en ce que** la flasque (54) comporte, entre la bague métallique (88) en tant que circonférence extérieure de celle-ci et un logement de palier central (55) destiné au palier à rouleaux (56), des nervures radiales (59) entre lesquelles des évidements (51) sont ménagés dans la direction circonférentielle (2), et la paroi de boîtier de connecteur (83) s'engage axialement dans les évidements (51) avec des prolongements axiaux (93), de préférence les prolongements axiaux (93) venant en appui radial sur la bague métallique (88).

10. Machine électrique (10) selon l'une des revendications précédentes, **caractérisée en ce que** les prolongements axiaux (93) forment un dispositif anti-rotation avec la flasque (54), les nervures radiales (59) étant coudées ou incurvées axialement de préférence vers la bague métallique (88) et le logement de palier (55) étant conçu comme un manchon central dont la transition vers les nervures radiales (59) est disposée axialement à distance de la bague métallique (88) .

11. Machine électrique (10) selon l'une des revendications précédentes, **caractérisée en ce que** le couvercle métallique (81) et la bague métallique (88) disposée radialement à l'intérieur de celui-ci viennent en appui axial sur une collerette (32) du bâti (15) et le cordon de soudure laser (90) est également formé axialement sur la collerette (32) du côté extérieur radial du couvercle métallique (81).

12. Machine électrique (10) selon l'une des revendications précédentes, **caractérisée en ce que** le bord, dirigé axialement vers le bâti (15), de la paroi périphérique (82) du couvercle métallique (81) est disposé dans un même plan radial directement entre le cordon de soudure laser (90) et la bague métallique (88), en particulier le bord, dirigé axialement vers le bâti (15), de la paroi du boîtier de connecteur (83) étant disposé entièrement radialement à l'extérieur de la flasque (54).

13. Machine électrique (10) selon l'une des revendications précédentes, **caractérisée en ce que** la bague métallique (88) est conçue comme un composant fabriqué séparément qui a une section transversale en forme de L ou une section transversale rectangulaire lorsqu'il est vu dans la direction circonférentielle (2), ce dernier étant disposé notamment debout ou couché.

14. Machine électrique (10) selon l'une des revendications précédentes, **caractérisée en ce que** la bague métallique (88) comporte une surface sombre, notamment noire, d'absorption des faisceaux laser (91) et est de préférence en aluminium ou en acier.

15. Procédé de réalisation d'une machine électrique (10) selon l'une des revendications précédentes, **caractérisé par** les étapes suivantes :
- monter le stator (16) et le rotor (18) dans le bâti (15) de manière que la flasque métallique (54) soit insérée axialement dans un gradin radial (11) au niveau du bord ouvert (31) du bâti (15),
- placer le boîtier du connecteur (33) sur le bord périphérique (53) de la flasque (54) qui est réalisé sous la forme d'une bague métallique fermée (88),
- assembler axialement le couvercle métallique (81) sur le boîtier de connecteur (33), en particulier de manière qu'un connecteur de raccordement (37) du boîtier de connecteur (33) fasse saillie axialement à travers un évidement (87) du couvercle métallique (81), le couvercle métallique (81) pressant le boîtier de connecteur (33) axialement contre la bague métallique (88) au moyen d'un élément à ressort (85),
- souder de manière étanche le couvercle métallique (81) au bâti (15) à l'aide d'un faisceau laser (91).
